(19) Europäisches Patentamt
European Patent Office
Office européen des brevets

(11) **EP 1 616 770 B1**

(12) **EUROPÄISCHE PATENTSCHRIFT**

(45) Veröffentlichungstag und Bekanntmachung des Hinweises auf die Patenterteilung:
**14.05.2008 Patentblatt 2008/20**

(51) Int Cl.:
*B60W 10/02* *(2006.01)*    *B60W 10/04* *(2006.01)*

(21) Anmeldenummer: 05013756.1

(22) Anmeldetag: **25.06.2005**

(54) **Verfahren zum Schutz einer automatisiert betätigten Kupplung eines Fahrzeugs gegen Überlastung**

Method for protecting an automatically actuated clutch of a vehicle against overload

Procédé pour proteger un embrayage commandé automatiquement d'un véhicule contre surcharge

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **30.06.2004 DE 102004031477**

(43) Veröffentlichungstag der Anmeldung:
**18.01.2006 Patentblatt 2006/03**

(73) Patentinhaber: **LuK Lamellen und Kupplungsbau Beteiligungs KG**
**77815 Bühl (DE)**

(72) Erfinder:
• **Stehle, Björn**
**77830 Bühlertal (DE)**
• **Henneberger, Klaus, Dr.**
**77815 Bühl (DE)**

(74) Vertreter: **Duschl, Edgar Johannes**
**LuK GmbH & Co. oHG**
**Bussmatten 2**
**77815 Bühl (DE)**

(56) Entgegenhaltungen:
**EP-A- 1 354 751        WO-A-03/011629**
**DE-A1- 19 818 809      DE-A1- 19 921 920**

EP 1 616 770 B1

**Beschreibung**

Die vorliegende Erfindung betrifft ein Verfahren zum Schutz einer automatisiert betätigten Kupplung eines Fahrzeugs gegen Überlastung nach dem Oberbegriff des Anspruchs 1.

Derartige automatisiert betätigte Kupplungen können an mit unterschiedlichen Getrieben ausgestatteten Fahrzeugen Einsatz finden. Die Unterscheidung des Getriebes betrifft dabei nicht nur den Grad der Automatisierung, sondern auch die Bauart, so dass es sich bei dem Getriebe beispielsweise um ein automatisiertes Schaltgetriebe, ein unterbrechungsfreies Schaltgetriebe, ein Parallelschaltgetriebe oder ein Getriebe mit stufenloser Veränderung der Übersetzung handeln kann. Bei solchen Getrieben übt die Kupplung in der Form der Reibungskupplung ganz allgemein zwei Funktionen aus, nämlich einmal die Funktion als Anfahrelement zu wirken und auch die Funktion, als Schaltelement zu wirken.

Sowohl beim Anfahren als auch beim Wiederherstellen der Kraftschlussverbindung zwischen dem Motor und dem Triebstrang nach einem Gangwechselvorgang wird über die Kupplung ein Kupplungsmoment bei Differenzdrehzahl zwischen der Eingangs- und der Ausgangsseite der Reibungskupplung übertragen. Dabei wird zwangsläufig Reibleistung als Produkt aus Kupplungsmoment und Differenzwinkelgeschwindigkeit in die Kupplungsreibflächen eingetragen, was zu einer Temperaturerhöhung der Reibflächen und damit der Kupplung insgesamt führt.

Der Verschleiß der Kupplungsreibflächen ist abhängig von dem Betrag der eingetragenen Energie und der Temperatur. Neben einem bestimmungsgemäßen Verschleiß der Reibflächen kann es dazu auch zu Sekundäreffekten in der Form von mechanischen Verformungen der Reibflächen und Veränderungen des Reibbeiwerts der Reibflächen kommen, so dass es beispielsweise bei einem Abfall des Reibbeiwerts der Reibpartner zu einer Verlängerung der Schlupfphase kommen kann und damit wiederum zu einer Zunahme der eingetragenen Energie.

Es ist daher insbesondere bei trocken laufenden Kupplungen von wesentlicher Bedeutung, den Energieeintrag in die Kupplung nicht zu hoch werden zu lassen.

Bei Fahrzeugen mit automatisiert betätigten Kupplungen ist die direkte Betätigung der Kupplung dem Einfluss des Fahrers entzogen, sehr wohl aber kann der Fahrer über seine Fahrweise auf das Verschleißverhalten der Kupplung Einfluss nehmen.

So ist es beispielsweise möglich, dass ein vom Fahrer bemerktes oder auch unbemerktes dauerhaftes Kriechen des Fahrzeugs gegen eine Steigung oder ein verzögerter Anfahrvorgang an einer Steigung zu einem erhöhten Energieeintrag in die Kupplung führt. Auch führt ein Halten des Fahrzeugs an einer Steigung durch das Fahrpedal zu einem erhöhten Energieeintrag in die Kupplung, wobei dies beispielsweise auch für den Fall gilt, dass der Fahrer beim Anfahren eine angezogene Feststellbremse übersieht.

In der DE 199 21 920 A1 wird ein Verfahren nach dem Oberbegriff des Anspruchs 1 beschrieben.

Neben diesen vom Fahrer des Fahrzeugs herbeigeführten Ursachen für einen erhöhten Energieeintrag in die Kupplung kann es aber auch durch Fehler im System zur Betätigung der automatisierten Reibungskupplung zu einem erhöhten Energieeintrag kommen, wie beispielsweise aufgrund von einer Verstimmung der hydraulischen Strecke zur Kupplungsbetätigung, wie beispielsweise einer Leckage. All dies sind lediglich Beispiele von Ursachen für eine erhöhte Belastung in Form eines erhöhten Energieeintrags in die Reibungskupplung.

Ausgehend hiervon ist es nun Aufgabe der vorliegenden Erfindung, ein Verfahren zum Schutz einer automatisiert betätigten Kupplung eines Fahrzeugs gegen Überlastung zu schaffen.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft nun zur Lösung dieser Aufgabe ein Verfahren zum Schutz einer automatisiert betätigten Kupplung eines Fahrzeugs, wobei nach dem Verfahren die Fahrsituation des Fahrzeugs festgestellt wird, die in die Kupplung eingetragene Energie kontinuierlich festgestellt wird und in Abhängigkeit von der festgestellten Fahrsituation und der eingetragenen Energie durch einen gezielten Eingriff in das Fahrzeugmanagement der Überlastzustand vermieden oder verringert wird.

Unter dem Begriff der Feststellung der Fahrsituation wird im Rahmen der vorliegenden Erfindung die Erkennung der Fahrsituation des Fahrzeugs anhand vorhandener oder einzuführender Fahrzeugparameter und auch die Überwachung der erkannten Fahrsituation auf Veränderung hin verstanden, so dass dann in Abhängigkeit des festgestellten Eintrags von Energie in die Kupplung eine Auswahl an Eingriffsmöglichkeiten in das Fahrzeugmanagement zur Vermeidung oder zum Abbau des Überlastzustands der Kupplung durchgeführt werden kann und der gezielte Eingriff daraufhin durchgeführt wird.

So ist es beispielsweise möglich, im Rahmen der Erkennung der Fahrsituation des Fahrzeugs eine Klassifizierung der Fahrsituation und eine Überwachung der festgestellten Fahrsituation durchzuführen.

In diesem Zusammenhang ist es nach der Erfindung beispielsweise vorgesehen, zur Feststellung der Fahrsituation zwischen zumindest den Situationen Kriechen, Anfahren und Fahren zu unterscheiden und diese Feststellung weitgehend kontinuierlich durchzuführen oder auch in vorbestimmten Zeitintervallen intermittierend.

Eine große Bedeutung bezüglich des Eintrags an Energie in die automatisiert betätigte Kupplung nehmen Schlupfzustände während eines Anfahrvorgangs oder einer Kriechfahrt ein, so dass es nach einer Weiterbildung des erfindungsgemäßen Verfahrens vorgesehen ist, bei der Fahrsituation Anfahren zwischen einem Anfahrvorgang bei stehendem Fahrzeug und einem Anfahrvorgang bei nicht stehendem Fahrzeug zu unterscheiden, wobei hier auch noch die eingelegte Fahrstufe festgestellt wird. So kann beispielsweise bei einem Anfahrvorgang bei stillstehendem Fahrzeug eine weitere Unterteilung getroffen werden hinsichtlich der eingelegten Fahrstufe, ob sich nämlich das Getriebe im ersten, im zweiten oder einem anderen Gang, wie beispielsweise dem Rückwärtsgang, befindet. Nachdem auch bei einem Anfahrvorgang an einer Steigung ein höherer Energieeintrag in die Reibungskupplung zu erwarten ist, kann auch anhand von vorhandener Fahrzeugparameter, wie beispielsweise einer Auswertung des Drosselklappenwinkels oder der Fahrpedalstellung oder beispielsweise auch eines Neigungssensorsignals eine Erkennung der Fahrsituation des Fahrzeugs durchgeführt werden.

Es ist nach der Erfindung dabei vorgesehen, dass die in die Kupplung eingetragene Energie festgestellt wird als Integral der zu jedem Zeitpunkt in die Kupplung eingebrachten Reibleistung über der Zeit nach der Formel

$$E_{\text{Reib}} = \int P_{\text{Reib}}(t)\,dt \,,$$

so dass zu jedem Zeitpunkt und bei jeder Fahrsituation der Energieeintrag in die Kupplung bekannt ist.

Die jeweils aktuelle Reibleistung ist dabei ein Produkt aus der aktuellen Schlupfdrehzahl nSchlupf an der Kupplung und dem aktuellen Reibmoment an der Kupplung MR, so dass sich die Reibleistung ergibt sich als

$$P_{\text{Reib}} = M_R\,\omega_{Schlupf} = M_R\,2\pi n_{Schlupf}\,.$$

Das in die Feststellung der eingetragenen Energie eingehende Reibmoment kann dabei nach einer Fortführung der Erfindung gemessen werden oder anhand von Kupplungskennlinien ermittelt werden oder auch bestimmt werden anhand vorhandener Parameter, wie beispielsweise der Motordrehzahl, dem Motormoment und dem Massenträgheitsmoment des Motors und des Kupplungsschwungrades.

So ist es beispielsweise möglich, nach einer Ausführungsform des erfindungsgemäßen Verfahrens das Reibmoment gemäß der Beziehung

$$M_R = M_{Mot} - J_{Mot}\,\dot{\omega}_{Mot} = M_{Mot} - J_{Mot}\,2\pi\dot{n}_{Mot}\,,$$

zu ermitteln, wobei die zur Ermittlung des Reibmoments MR erforderlichen Daten, nämlich die Motordrehzahl nMot, das Motormoment MMot über ein im Fahrzeug vorhandenes Bussystem, beispielsweise dem CAN-Bus übermittelt werden und das Massenträgheitsmoment von Motor und Schwungrad JMot bekannt ist.

Nachdem damit das Reibmoment zu jedem betrachteten Zeitpunkt bekannt ist, kann die in die Kupplung eingetragene Energie zu jedem betrachteten Zeitpunkt festgestellt werden.

Nach der Erfindung ist es vorgesehen, dass in Abhängigkeit vorbestimmter Schwellenwerte der in die Kupplung eingetragenen Energie oder des zu erwartenden Energieeintrags in die Kupplung unterschiedliche gezielte Eingriffe in das Fahrzeugmanagement vorgenommen werden, wobei die Schwellenwerte in Abhängigkeit von der aktuellen Temperatur der Kupplung ermittelt werden können.

Damit können nun in Abhängigkeit des von der festgestellten Fahrsituation abhängigen erwarteten Energieeintrags oder auch der festgestellten tatsächlich eingetragenen Energie in die Reibungskupplung unterschiedliche Eingriffe in das Fahrzeugmanagement vorgenommen werden. Es ist dabei möglich, die Schwellenwerte in Abhängigkeit von der festgestellten Fahrsituation vorzubestimmen oder auch in Abhängigkeit von der aktuellen Temperatur der Kupplung zu ermitteln, so dass in die Bestimmung der Schwellenwerte die aktuelle Belastungssituation der Kupplung mit eingehen kann. In Abhängigkeit von den ermittelten Energieeintragsschwellen können dann unterschiedliche Eingriffe in das Fahrzeugmanagement vorgenommen werden.

Sofern beispielsweise der festgestellte oder erwartete Energieeintrag in die Kupplung zu einer Kupplungstemperatur von beispielsweise bis zu 250 Grad Celsius führt, kann von einer normalen Belastungssituation der Kupplung ausgegangen werden, so dass bis zu diesem zugehörigen Energieeintragsschwellenwert keine Eingriffe in das Fahrzeugmanagement durchgeführt werden. Mit steigender Temperatur der Kupplung werden die tolerierten Energieeintragsschwellen, ab deren Erreichen dann gezielte Eingriffe in das Fahrzeugmanagement vorgenommen werden, verringert.

Wenn nun aufgrund des festgestellten oder zu erwartenden Energieeintrags von einer Kupplungstemperatur von etwa 250 Grad Celsius bis etwa 350 Grad Celsius ausgegangen wird, so können nach der Erfindung komforteinschränkende Eingriffe in das Fahrzeugmanagement durchgeführt werden, wie beispielsweise einen Anfahrvorgang im zweiten Gang nicht mehr durchzuführen.

Wenn der festgestellte oder erwartete Energieeintrag zu einer Kupplungstemperatur von beispielsweise mehr als 350 Grad Celsius führen würde, so ist ein weiterer komfortmindernder Eingriff in das Fahrzeugmanagement möglich, wie beispielsweise eine Verringerung des vom Motor abgegebenen Motormoments.

Nach einer Weiterbildung der Erfindung ist es dabei vorgesehen, dass die Eingriffe in das Fahrzeugmanagement in Abhängigkeit vorbestimmter Schwellenwerte einer zu erwartenden Dauer einer Schlupfbedingung der Kupplung des Fahrzeugs ausgeführt werden können. So ist es auch möglich, den zu erwartenden Energieeintrag in Abhängigkeit der zu erwartenden Dauer des Schlupfzustands der Kupplung zu bestimmen.

Da die Auswahl der gezielten Eingriffe in das Fahrzeugmanagement auch in Abhängigkeit der festgestellten und überwachten Fahrsituation des Fahrzeugs durchgeführt werden, ist es nach der Erfindung auch vorgesehen, dass der jeweilige Eingriff in Abhängigkeit vorbestimmter Schwellenwerte der Geschwindigkeit des Fahrzeugs ausgeführt wird, um etwaige sicherheitskritische Eingriffe in das Fahrzeugmanagement zu vermeiden.

Wenn nach dem erfindungsgemäßen Verfahren beispielsweise festgestellt wird, dass sich das Fahrzeug in der Fahrsituation Kriechvorgang an einer Steigung befindet, und die Auswertung der Fahrzeuggeschwindigkeit ergibt, dass diese nahezu Null ist und die Energieeintragsschwelle überschritten wird, so dass ein kupplungsschützender Eingriff in das Fahrzeugmanagement notwendig wird, so kann in dieser Situation die Kupplung aus Sicherheitsgründen weder geöffnet werden, was zu einem Rückrollen des Fahrzeugs in die entgegengesetzte Richtung führen würde, noch kann die Kupplung geschlossen werden, da sich das Fahrzeug ansonsten in Bewegung setzen würde, was dem Fahrerwunsch möglicherweise nicht entspricht, so kann nach der Erfindung der Eingriff in das Fahrzeugmanagement derart aussehen, dass lediglich ein akustischer und/oder optischer und/oder haptischer Hinweis an den Fahrer des Fahrzeugs abgegeben wird, also beispielsweise eine visuelle Warnung im Display des Fahrzeugs erscheint, eine akustische Warnung über einen Fahrzeugsummer ausgegeben wird oder eine haptische Warnung an den Fahrer ausgegeben wird in Form eines aktiv herbeigeführten Fahrzeugruckelns durch eine entsprechende Betätigung der Kupplung.

Nach einer Weiterbildung der Erfindung ist es auch vorgesehen, dass vor der Durchführung des Eingriffs in das Fahrzeugmanagement eine vorbestimmbare Zeitdauer abgewartet wird, während der das Vorliegen der Bedingung für den Eingriff weiterhin überprüft wird. Während dieser Zeitdauer kann beispielsweise auch ein entsprechender akustischer und/oder optischer und/oder haptischer Warnhinweis an den Fahrer des Fahrzeugs ausgegeben werden, der signalisiert, dass es sich bei dem dann folgenden Eingriff in das Fahrzeugmanagement nicht um eine Fehlfunktion handelt, sondern um eine Kupplungsschutzfunktion. Wenn nunmehr während dieser Vorwarnzeit die Überprüfung des weiterhin Vorliegens der Überlastsituation der Kupplung ergibt, dass - beispielsweise aufgrund einer entsprechenden Reaktion des Fahrers des Fahrzeugs auf den Vorwarnhinweis hin - die Überlastsituation nicht mehr gegeben ist, so wird nach der Erfindung der ansonsten erforderliche Eingriff in das Fahrzeugmanagement entweder nicht mehr durchgeführt, oder es folgt ein Eingriff in das Fahrzeugmanagement, der bezüglich seiner Wichtung eine weniger komfortmindernde Maßnahme darstellt, wie beispielsweise ein kurzzeitiges Verhindern des Anfahrens des Fahrzeugs im zweiten Gang, wobei aber weiterhin ein Anfahren des Fahrzeugs im ersten Gang mit einem geringeren Energieeintrag in die Kupplung möglich ist.

In Abhängigkeit der Energieeintragsschwelle können daher nach der Erfindung unterschiedliche Eingriffe in das Fahrzeugmanagement in der Form von Maßnahmen zur Verringerung der Belastung der Kupplung eingeleitet werden. Beispiele solcher Maßnahmen in Abhängigkeit von der festgestellten Fahrsituation sind in der nachfolgenden Tabelle dargestellt.

## Gegenmaßnahmen

| Situation | Funktion deaktivieren | Kupplung öffnen | Kupplung schließen | Motoreingriff | Motor abstellen | Motor abwürgen | Bremseingriff | Fahrerwarnung |
|---|---|---|---|---|---|---|---|---|
| Kriechen gegen Steigung (Fahrzeuggeschwindigkeit kleiner als Schrittgeschwindigkeit) | | | | | | | | X |
| Kriechen gegen Steigung (Fahrzeug steht) | X | X | | | | | X | |
| Kriechen gegen Steigung (Fahrzeuggeschwindigkeit größer als Schrittgeschwindigkeit) | | | X | | | | | |
| Halten des Fahrzeugs an Steigung über Fahrpedal | | | X | | | | | X |
| Anfahren | | | X | | | | | |
| Stall | | X | | | | | | |
| Stall | | | | | | X | | |
| Stall | | | | X | | | | |
| Fahren im Gang, Kupplung schlupft durch fehlerhafte Momentennachführung | | | X | | | | | |

Die Tabelle zeigt dabei lediglich Beispiele von gezielten Eingriffen in das Fahrzeugmanagement, also beispielsweise nach Erkennen der Fahrsituation "Kriechen gegen Steigung" kann, wenn dieser Kriechvorgang bereits zum Überschreiten einer vorbestimmten Energieeintragsschwelle geführt hat, eine Warnung an den Fahrer ausgegeben werden, beispielsweise derart, dass ein optischer Hinweis erfolgt, dass die Kupplung des Fahrzeugs überlastet wird.

Bei dem in der Tabelle dargestellten zweiten Beispiel "Kriechen gegen Steigung bei stehendem Fahrzeug" kann ein wirksamer Eingriff in das Fahrzeugmanagement darin bestehen, dass die Kriechfunktion deaktiviert wird, zur Vermeidung einer weiteren thermischen Belastung der Kupplung die Kupplung geöffnet wird und gleichzeitig ein Bremseingriff stattfindet, der ein Zurückrollen des Fahrzeugs vermeidet. Dieses Beispiel zeigt, dass der gezielte Eingriff in das Fahrzeugmanagement auch aus einer Abfolge von mehreren Einzeleingriffen bestehen kann.

Wenn im Rahmen der Feststellung der Fahrsituation festgestellt wird, dass sich das Fahrzeug in einem Kriechvorgang an einer Steigung befindet und dabei die Fahrzeuggeschwindigkeit bereits größer ist als eine Schrittgeschwindigkeit, dann kann ein gezielter Eingriff zur Vermeidung einer weiteren thermischen Belastung der Kupplung darin bestehen, dass die Kupplung vollständig geschlossen wird.

Wenn nach der Erfindung beispielsweise festgestellt wird, dass das Fahrzeug an einer Steigung über eine Betätigung des Fahrpedals oder Gaspedals des Fahrzeugs gehalten wird, und der Energieeintragsschwelle in die Kupplung einen vorbestimmbaren Schwellenwert bereits überschritten hat oder zu überschreiten droht, dann kann beispielsweise nach einem entsprechenden Hinweis an den Fahrer die Kupplung geschlossen werden. Die vor dem Schließen der Kupplung ausgegebene Fahrerwarnung kann möglicherweise zu einer Veränderung des Verhaltens des Fahrers derart führen, dass er das Fahrpedal nicht weiter betätigt, so dass das vom Motor abgegebene Motormoment sinkt und damit der Energieeintrag in die Kupplung verringert wird, so dass ein Schutz der Kupplung durch Schließen der Kupplung nicht mehr implementiert werden muss, da im Rahmen der Überwachung, ob die festgestellte Fahrsituation noch zutreffend ist, festgestellt wurde, dass dies nicht mehr der Fall ist und dahingegen nunmehr die Situation "Kriechen gegen Steigung" bei stehendem Fahrzeug eingetreten ist und die vorstehend geschilderten gezielten Eingriffe in das Fahrzeugmanagement vorgenommen werden.

Wenn im Rahmen des erfindungsgemäßen Verfahrens beispielsweise auf der Basis der Auswertung vorhandener Fahrzeugparameter festgestellt wird, dass sich das Fahrzeug in einem Anfahrvorgang befindet und zu diesem Zweck vom Fahrer möglicherweise das Fahrpedal stark durchgetreten wird, um eine entsprechende hohe Beschleunigung des Fahrzeugs vom Stillstand weg zu erreichen, dann führt dies - bei bereits stark erhitzter Kupplung - zu einem erhöhten Energieeintrag in die Kupplung, der fahrsituationsabhängige Energieeintragsschwellenwert wird überschritten und die Kupplung wird geschlossen, was auch ohne Herbeiführung einer sicherheitskritischen Situation aufgrund der Auswertung des Fahrpedalwinkels und der Feststellung des entsprechenden Fahrerwunsches möglich ist.

Wenn die nach der Erfindung vorgesehene Feststellung der Fahrsituation des Fahrzeugs einen Anfahrvorgang gegen die Betriebs- und/oder Feststellbremse des Fahrzeugs ergibt (Stall), dann kann dies in Abhängigkeit weiterer festgestellter Fahrzeugparameter zu unterschiedlichen gezielten Eingriffen in das Fahrzeugmanagement führen, beispielsweise einem Öffnen der Kupplung, was aufgrund der ohnehin betätigten Bremse des Fahrzeugs nicht sicherheitskritisch ist, oder auch beispielsweise dazu, dass der Motor mittels eines Eingriffs in das Motormanagement abgestellt wird oder abgewürgt wird, wobei dies auch in Verbindung mit einem entsprechenden Hinweis an den Fahrer erfolgen kann. Auch kann als mögliche Alternative zum Abstellen des Motors lediglich ein Eingriff in das Motormanagement in Verbindung mit einer Verringerung des vom Motor abgegebenen Antriebsmoments stattfinden.

Wenn nach dem erfindungsgemäßen Verfahren im Rahmen der Feststellung der Fahrsituation des Fahrzeugs ein "Fahren im Gang" festgestellt wird und darüber hinaus ein Anstieg der Schlupfdrehzahl, dann kann darauf geschlossen werden, dass die Kupplung aufgrund fehlerhafter Momentennachführung schlupft und ein Eingriff in das Fahrzeugmanagement in Form einer Anweisung an die Kupplungssteuerung stattfindet, die Kupplung weiter zu schließen.

Die Erfindung wird nun nachfolgend noch anhand eines Beispieles näher erläutert.

Die Energieeintragsschwelle hängt von Parametern, wie beispielsweise der Fahrzeugmasse, dem maximal zur Verfügung gestellten Motormoment und weiterer Parameter, wie beispielsweise der Fahrbahnsteigung, der Höhe der Anfahrdrehzahl und so weiter ab. Wenn, lediglich als Beispiel, ein Fahrzeug mit einem maximalen Motormoment von 200 Nm und einer Masse von 1.300 kg betrachtet wird, dann kann bei einer Volllastanfahrt mit einer Anfahrdrehzahl von etwa 2.000 1/min in der Ebene von einem zu erwartenden Energieeintrag von etwa 25 kJ ausgegangen werden, der bei einer anderen Fahrsituation, nämlich beispielsweise dem Anfahren bei voller Zuladung und einer Steigung von etwa 20 % auch mehr als 100 kJ betragen kann. Wie vorstehend bereits erwähnt wurde, können Energieeintragsschwellenwerte auch in Abhängigkeit der errechneten oder gemessenen Kupplungstemperatur bestimmt werden. Wenn nun bei dem vorstehend genannten Beispiel der Anfahrt des Fahrzeugs in der Ebene bei einer Kupplungstemperatur von etwa 250 Grad Celsius ein zu erwartender Energieeintrag von bis zu 60 kJ festgestellt wird, dann wird nach dem erfindungsgemäßen Verfahren ein noch nicht kritischer Belastungsbereich der Kupplung festgestellt, so dass belastungsmindernde gezielte Eingriffe in das Fahrzeugmanagement noch unterbleiben können. Dieser Energieeintragsschwellenwert sinkt mit zunehmender festgestellter oder berechneter Kupplungstemperatur, so dass die Energieeintragsschwelle bei einer Kupplungstemperatur von etwa bis zu 350 Grad Celsius auf etwa 25 kJ absinkt, oberhalb der dann gezielte Eingriffe in das Management des Fahrzeugs ausgeführt werden, um die Belastung der Kupplung zu verringern. Wenn die festgestellte oder berechnete Kupplungstemperatur einen Wert von mehr als 350 Grad Celsius annimmt, so wird der Energieeintragsschwellenwert weiter verringert und nimmt beispielsweise einen Wert von 15 kJ an, bei dessen Überschreiten wieder gezielte Eingriffe in das Fahrzeugmanagement ausgeführt werden, also beispielsweise ein Eingriff in das Motormanagement zur Verringerung des bereitgestellten Abtriebsmoments oder ein Zuziehen der Kupplung zur Beendigung der Schlupfbedingung.

Die Erfindung stellt daher nun ein Verfahren zur Verfügung, um eine automatisiert betätigte Kupplung eines Fahrzeugs gegen Überlastung zu schützen. Auf der Basis der Feststellung der Fahrsituation, beispielsweise eines Kriechvorgangs, eines Anfahrvorgangs, eines Anfahrvorgangs bei betätigter Betriebsbremse oder Feststellbremse des Fahrzeugs, einer Fahrt des Fahrzeugs oder einem Schaltvorgang werden anhand von Fahrzeugsignalen der jeweiligen Fahrsituation und dem jeweiligen Energieeintrag in die Kupplung entsprechende gezielte Eingriffe in das Fahrzeugmanagement zur Vermeidung oder zur Verringerung des Belastungszustands der Kupplung herbeigeführt.

Hinsichtlich vorstehend im Einzelnen nicht näher erläuterter Merkmale der Erfindung wird im Übrigen ausdrücklich auf die Ansprüche verwiesen.

**Patentansprüche**

1. Verfahren zum Schutz einer automatisiert betätigten Kupplung eines Fahrzeugs gegen Überlastung, umfassend folgende Schritte:

   - es wird die Fahrsituation des Fahrzeugs festgestellt
   - es wird die in die Kupplung eingetragene Energie kontinuierlich festgestellt
   - in Abhängigkeit von der festgestellten Fahrsituation und der eingetragenen Energie wird **durch** gezielten Eingriff in das Fahrzeugmanagement der Überlastzustand vermieden oder verringert, wobei

in Abhängigkeit vorbestimmter Schwellenwerte der in die Kupplung eingetragenen Energie oder des zu erwartenden Energieeintrags unterschiedliche gezielte Eingriffe in das Fahrzeugmanagement vorgenommen werden, **dadurch gekennzeichnet, dass** die Schwellenwerte in Abhängigkeit von der aktuellen Temperatur der Kupplung ermittelt werden.

2. Verfahren nach Anspruch 1, **dadurch gekennzeichnet, dass** zur Feststellung der Fahrsituation zwischen zumindest den Situationen Kriechen, Anfahren und Fahren unterschieden wird und die Feststellung weitgehend kontinuierlich oder intermittierend ausgeführt wird.

3. Verfahren nach Anspruch 1 oder 2, **dadurch gekennzeichnet, dass** bei der Fahrsituation Anfahren zwischen einem Anfahrvorgang bei stehendem Fahrzeug und einem Anfahrvorgang bei nicht stehendem Fahrzeug unterschieden wird und dabei die eingelegte Fahrstufe festgestellt wird.

4. Verfahren nach einem der vorstehenden Ansprüche, **dadurch gekennzeichnet, dass** die in die Kupplung eingetragene Energie festgestellt wird als Integral der zu jedem Zeitpunkt in die Kupplung eingebrachten Reibleistung über der Zeit nach der Formel

$$E_{\mathbf{Reib}} = \int P_{\mathbf{Reib}}(t)dt \, .$$

5. Verfahren nach einem der vorstehenden Ansprüche, **dadurch gekennzeichnet, dass** zur Feststellung der in die Kupplung eingetragenen Energie das Reibmoment gemessen wird oder anhand von Kupplungskennlinien ermittelt wird oder bestimmt wird anhand der Motordrehzahl, dem Motormoment und einem Massenträgheitsmomentwert.

6. Verfahren nach einem der vorstehenden Ansprüche, **dadurch gekennzeichnet, dass** die Eingriffe in das Fahrzeugmanagement in Abhängigkeit vorbestimmter Schwellenwerte einer zu erwartenden Dauer einer Schlupfbedingung der Kupplung des Fahrzeugs ausgeführt werden.

7. Verfahren nach einem der vorstehenden Ansprüche, **dadurch gekennzeichnet, dass** die Eingriffe in das Fahrzeugmanagement in Abhängigkeit vorbestimmter Schwellenwerte der Geschwindigkeit des Fahrzeugs ausgeführt werden.

8. Verfahren nach einem der vorstehenden Ansprüche, **dadurch gekennzeichnet, dass** vor der Durchführung des Eingriffs in das Fahrzeugmanagement ein optisches und/oder akustisches und/oder haptisches Signal abgegeben wird.

9. Verfahren nach einem der vorstehenden Ansprüche, **dadurch gekennzeichnet, dass** vor der Durchführung des Eingriffs in das Fahrzeugmanagement eine vorbestimmbare Zeitdauer abgewartet wird, während der das Vorliegen der Bedingung für den Eingriff weiterhin überprüft wird.

**Claims**

1. Method for protecting an automatically actuated clutch of a vehicle against overloading, comprising the following steps:

- the driving situation of the vehicle is detected
- the energy which is input into the clutch is continuously detected
- the overload state is avoided or reduced as a function of the detected driving situation and the input energy by selective intervention into the vehicle management system, wherein different selective interventions are made into the vehicle management system as a function of predetermined threshold values of the energy which is input into the clutch or of the anticipated energy input, **characterized in that** the threshold values are identified as a function of the current temperature of the clutch.

2. Method according to Claim 1, **characterized in that**, in order to detect the driving situation, a differentiation is made between at least the states of crawling, starting and driving, and the detection is carried out largely continuously or intermittently.

3. Method according to Claim 1 or 2, **characterized in that** in the driving state of starting, a differentiation is made between a starting process when the vehicle is stationary and a starting process when the vehicle is not stationary, and in this context the selected driving position is detected.

4. Method according to one of the preceding claims, **characterized in that** the energy which is input into the clutch is detected as an integral of the friction which is introduced into the clutch at any time, over time according to the formula

$$E_{Fric} \;=\; \int P_{Fric}(t)dt.$$

5. Method according to one of the preceding claims, **characterized in that** the frictional torque is measured in order to detect the energy which is input into the clutch or said frictional torque is identified by reference to clutch characteristic curves or is determined by reference to the engine speed, the engine torque and a value of the moment of mass inertia.

6. Method according to one of the preceding claims, **characterized in that** the interventions into the vehicle management system are carried out as a function of predetermined threshold values of an anticipated duration of a slip condition of the clutch of the vehicle.

7. Method according to one of the preceding claims, **characterized in that** the interventions into the vehicle management system are carried out as a function of predetermined threshold values of the speed of the vehicle.

8. Method according to one of the preceding claims, **characterized in that** before the intervention into the vehicle management system is carried out, a visual and/or audible and/or haptic signal is output.

9. Method according to one of the preceding claims, **characterized in that**, before the intervention into the vehicle management system is carried out, the system waits for a predeterminable time period during which the fulfilment of the condition for the intervention is checked further.

**Revendications**

1. Procédé pour protéger contre une surcharge un embrayage de véhicule actionné automatiquement, comprenant les étapes suivantes :

   - la situation de conduite du véhicule est établie ;
   - l'énergie introduite dans l'embrayage est établie en continu ;
   - en fonction de la situation de conduite établie et de l'énergie introduite, on évite ou on réduit l'état de surcharge en intervenant de manière ciblée dans la gestion du véhicule,

   différentes interventions ciblées dans la gestion du véhicule étant effectuées en fonction de valeurs seuil prédéterminées de l'énergie introduite dans l'embrayage ou de l'apport d'énergie attendu,
   **caractérisé en ce que** les valeurs seuil sont déterminées en fonction de la température actuelle de l'embrayage.

2. Procédé selon la revendication 1, **caractérisé en ce que** pour établir la situation de conduite on fait une distinction entre au moins les situations de roulage au pas, de démarrage et de conduite, et l'on fait un établissement essentiellement en continu ou de manière intermittente.

3. Procédé selon la revendication 1 ou 2, **caractérisé en ce que** dans la situation de conduite de démarrage, on fait la distinction entre une opération de démarrage lorsque le véhicule est arrêté et une situation de démarrage lorsque le véhicule n'est pas arrêté, et l'on établit en l'occurrence le rapport de marche enclenché.

4. Procédé selon l'une quelconque des revendications précédentes, **caractérisé en ce que** l'énergie introduite dans l'embrayage est établie sous forme d'intégrale de la puissance de frottement appliquée à chaque instant dans l'embrayage en fonction du temps conformément à la formule :

$$E_{\mathrm{Reib}} = \int P_{\mathrm{Reib}(t)dt}.$$

**5.** Procédé selon l'une quelconque des revendications précédentes, **caractérisé en ce que** pour établir l'énergie introduite dans l'embrayage, le couple de frottement est détecté à l'aide de lignes caractéristiques d'embrayage, ou est déterminé à l'aide du régime du moteur, du couple du moteur et d'une valeur du couple d'inertie de masse.

**6.** Procédé selon l'une quelconque des revendications précédentes, **caractérisé en ce que** les interventions dans la gestion du véhicule sont effectuées en fonction de valeurs seuil prédéterminées d'une durée attendue d'une condition de glissement de l'embrayage du véhicule.

**7.** Procédé selon l'une quelconque des revendications précédentes, **caractérisé en ce que** les interventions dans la gestion du véhicule sont effectuées en fonction de valeurs seuil prédéterminées de la vitesse du véhicule.

**8.** Procédé selon l'une quelconque des revendications précédentes, **caractérisé en ce qu'**avant la mise en oeuvre de l'intervention dans la gestion du moteur, un signal optique et/ou acoustique et/ou tactile est émis.

**9.** Procédé selon l'une quelconque des revendications précédentes, **caractérisé en ce qu'**avant la mise en oeuvre de l'intervention dans la gestion du véhicule, une durée prédéterminable est attendue, pendant laquelle la présence de la condition pour l'intervention est en outre vérifiée.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19921920 A1